# EUROPÄISCHE PATENTSCHRIFT

(11) **EP 4 399 417 B1**
(45) Veröffentlichungstag und Bekanntmachung des Hinweises auf die Patenterteilung: **25.02.2026**
(21) Anmeldenummer: 22764303.8
(22) Anmeldetag: 23.08.2022
(51) Int. Cl.: F16C 33/54, F16C 33/58, F16C 33/64, F16C 33/66, F16C 19/30, F16C 19/46

(54) **AXIALWÄLZLAGEREINHEIT MIT ZWISCHEN KREISRINGFÖRMIGEN AXIALLAGERSCHEIBEN ANGEORDNETEN WÄLZKÖRPERN UND EINEM FUNKTIONSINTEGRIERTEM LAGERKÄFIG**
THRUST ROLLING BEARING UNIT WITH ROLLING ELEMENTS HOLD BETWEEN ANNULAR THRUST BEARING RACES AND FUNCTION INTEGRATED BEARING CAGE
UNITÉ DE BUTÉE AXIALE AVEC DES ELEMENTS ROULANTS RETENUS ENTRE DEUX PISTES DE BUTÉE AXIALE ANNULAIRES ET CAGE À FONCTION INTÉGRÉE

(30) Priorität: 09.09.2021 DE 102021123371
(43) Veröffentlichungstag der Anmeldung: 17.07.2024
(73) Patentinhaber: Schaeffler Technologies AG & Co. KG, 91074 Herzogenaurach (DE)
(72) Erfinder: FUGEL, Wolfgang, 90453 Nürnberg (DE); SCHOENSTEIN, Frank, 91083 Baiersdorf (DE); KIRSCHNER, Andreas, 91086 Aurachtal (DE)
(74) Vertreter: Schaeffler Technologies
(86) Internationale Anmeldenummer: PCT/DE2022/100633
(87) Internationale Veröffentlichungsnummer: WO 2023/036369

(56) Entgegenhaltungen:
- WO-A1-2021/118879
- DE-A1- 102018 130 947
- FR-A- 1 223 324
- FR-A- 1 446 492
- JP-A- 2009 041 753

## Beschreibung

Die vorliegende Erfindung betrifft eine Wälzlagereinheit mit zwischen zwei kreisringförmigen Axiallagerscheiben angeordneten Wälzkörpern, die mittels eines aus einem Blechmaterial umgeformten Lagerkäfig geführt sind gemäß Anspruch 1.

Das Einsatzgebiet der vorliegenden Erfindung erstreckt sich vornehmlich auf kraftfahrzeugtechnische Anwendungen, bei denen beispielsweise eine mit schrägverzahnten Zahnrädern versehene Welle eine Axialkraftbeaufschlagung erfährt, welche gegenüber einem Getriebegehäuse oder dergleichen durch eine geeignete Axiallagerung aufzunehmen ist. Dabei widmet sich die erfindungsgemäße Lösung insbesondere einer weitestgehend umformtechnischen Herstellung der Lagerkomponenten, insbesondere des Lagerkäfigs sowie der Axiallagerscheiben.

### Stand der Technik

Aus der DE 103 13 183 A1 geht eine Axialwälzlagereinheit der hier interessierenden Art hervor. Hierbei ist an einer äußeren peripheren Kante einer Axiallagerscheibe ein Kragen angeordnet, der durch einen Flansch verlängert ist. In einem durch Kragen und Flansch zusammengesetzten Bereich ist ein radial nach innen gerichteter nasenartiger Vorsprung gebildet, der den Käfig außenumfänglich radial hintergreift. Die andere Axiallagerscheibe ist als Winkelscheibe ausgebildet und hintergreift den Lagerkäfig innenumfänglich mit einem axialen Schenkel. Durch diese Winkelgeometrie der Axiallagerscheiben entsteht eine in sich selbst zusammenhaltende Axialwälzlagereinheit.

Bei der Montage des Lagerkäfigs in die als Winkelscheiben ausgebildeten Axiallagerscheiben kann es insbesondere bei einer automatisierten Fertigung zu einer ungünstigen Konzentrizität zwischen Lagerkäfig und Axiallagerscheibe kommen. Dies kann entweder zu einem Verbiegen des Lagerkäfigs oder einem Abscheren der Haltenasen an den Axiallagerscheiben kommen. Dies führt bei Nichtentdeckung zu einem gestörten Ablaufverhalten der Axiallagerung bis hin zu einem Versagen der gesamten Lagerstelle. Bei einer zu geringen Überdeckung zwischen der als Winkelscheibe ausgebildeten Axiallagerscheibe und dem Lagerkäfig kann es infolge von Vibrationsbeanspruchung sogar zur Demontage der Axialwälzlagereinheit kommen.

Aus der DE 10 2018 130 947 A1 ist eine Axialwälzlagereinheit nach dem Oberbegriff von Anspruch 1 bekannt.

Aus den Dokumenten FR 1 446 492 A, JP 2009 041753 A, FR 1 223 324 A und WO 2021/118879 A1 sind weitere Wälzlager bekannt.

Es ist die Aufgabe der vorliegenden Erfindung, eine Axialwälzlagereinheit der vorstehend beschriebenen Art dahingehend weiter zu verbessern, dass eine reproduzierbar zuverlässige Montage sowie ein anschließender zuverlässiger Zusammenhalt der Baueinheit gewährleistet wird.

### Offenbarung der Erfindung

Die Aufgabe wird durch eine Axialwälzlagereinheit gemäß Anspruch 1 gelöst. Die nachfolgenden abhängigen Ansprüche geben vorteilhafte Weiterbildungen der Erfindung wieder.

Die Erfindung schließt die technische Lehre ein, dass der aus einem Blechmaterial umgeformte Lagerkäfig einer Axialwälzlagereinheit einen innen- und außenradial jeweils sich in Axialrichtung erstreckendes Randbord zur Radialführung der Wälzkörper aufweist, wobei zumindest eines dieser Randborde als Doppelbord ausgeführt mit einer endseitigen Umbiegung in die Gegenrichtung versehen ist, wobei dessen distaler Endabschnitt einen die zugeordnete Axiallagerscheibe formschlüssig haltenden Bordrand aufweist.

Der Vorteil der erfindungsgemäßen Lösung besteht insbesondere darin, dass die in sich selbst zusammenhaltende Baueinheit über einen speziell konstruierten Lagerkäfig realisiert ist, welcher die mindestens eine Axiallagerscheibe umfasst statt umgekehrt, wie im Stand der Technik. Dies eröffnet auch die Möglichkeit, hinsichtlich der kreisringförmigen Axiallagerscheiben auf Gleichteile zurückzugreifen, welche identisch gestaltet sind. Pro Axialwälzlagereinheit sind somit nicht zwei verschiedene Axiallagerscheiben bereitzustellen, sondern es genügen insgesamt drei verschiedene Bauteile, nämlich die Wälzkörper, der Lagerkäfig sowie die beidseits einsetzbaren Axialscheiben, um die erfindungsgemäße Axialwälzlagereinheit zu realisieren. Dies führt zu einer erheblichen Vereinfachung der Fertigung sowie der Lagerhaltung von Einzelteilen.

Gemäß einer bevorzugten Ausführungsform des Lagerkäfigs weist das dem Doppelbord gegenüberliegende Randbord des Lagerkäfigs ebenfalls einen distalen Endabschnitt mit einem die andere Axiallagerscheibe umgreifenden Bordrand auf, um über den Lagerkäfig als Haltemittel eine insgesamt in sich selbst haltende Baueinheit zu schaffen. Hierbei übernimmt das innen- und außenradiale Randbord die Ein- oder Umfassung einer je zugeordneten Axiallagerscheibe. Dabei kann diese Ein- oder Umfassung so gestaltet werden, dass die jeweilige Axiallagerscheibe unter einem Bauteilspannungen verhindernden radialen Bewegungsspiel gegenüber dem Lagerkäfig angeordnet ist. Diese konstruktive Gestaltung eröffnet bei der Montage ein zunächst beschädigungsfreies Zusammenlegen der Einzelteile, um diese im folgenden Arbeitsgang derart zusammenzupressen, dass sich die Bordränder umlegen, um die Baueinheit zu bilden. Da die erfindungsgemäße Baueinheit durch das Umlegen der Bordränder rundherum weitestgehend geschlossen wird, ist eine ungewollte Demontage ausgeschlossen.

Zur Biegeerleichterung sind die distalen Endabschnitte der Randborde vorzugsweise umformtechnisch abgestreckt ausgebildet. Durch dieses Einschnüren des Randbords entsteht eine vorgegebene Biegestelle vorzugsweise dadurch, dass das Randbord bereits beim Tiefziehen des umformtechnisch hergestellten Lagerkäfigs entsprechend vorgebogen ist. Hierdurch wird der normalerweise beim Tiefziehen nachteilhafte materialschwächende Abstreckeffekt als Vorteil zur Erzeugung der Soll-Biegestelle für den Bordrand genutzt.

Dabei wird der abgestreckte distale Endabschnitt des Randbords vorzugsweise so gestaltet, dass sich nach dem Umlegen des Bordrandes auf die zugeordnete Axialscheibe ein annähernder Formschluss ergibt. Dies kann dadurch erreicht werden, dass die Axiallagerscheiben mit einem je innen- und außenradialen Randabsatz versehen sind, der mit dem jeweils zugeordneten abgestreckten distalen Endabschnitt des Randbords derart zusammenwirkt, dass der zur Einfassung umgebogene Bordrand nicht wesentlich über die äußere Seitenfläche der Axiallagerscheibe hervorsteht, vorzugsweise eine plane äußere Seitenfläche ergibt. Der je innen- und außenradiale Randabsatz der Axiallagerscheibe wird vorzugsweise durch Prägen erzeugt. Die kreisringförmigen Axiallagerscheiben können also als fertigungstechnisch einfach realisierbare Stanz-Präge-Teile aus einem Blechmaterial hergestellt werden. Obwohl im montierten Zustand nur jeweils einer der Randabsätze der Axiallagerscheiben mit dem umgebogenen Bordrand zusammenwirkt, kann der andere Randabsatz frei bleiben, ohne dass dies die Funktionalität der Axialwälzlagereinheit beeinträchtigt. Dieser Kompromiss wird zugunsten der vorstehend erwähnten Gleichteileigenschaft der Axiallagerscheiben eingegangen.

Gemäß einer alternativen Ausgestaltung der erfindungsgemäßen Lösung kann das die Axiallagerscheibe umgreifende Randbord des Lagerkäfigs auch nur abschnittsweise auf einem Teil des Umfangs ausgebildet sein. Dies bedeutet, dass der Bordrand bei der Montage nicht entlang des Gesamtumfangs umzubiegen ist, sondern nur partiell, was mit einem entsprechend gestalteten Biegestempel realisierbar ist. Dies reduziert die zur Montage erforderlichen Presskräfte erheblich.

Erfindungsgemäß ist vorgesehen, dass ein der jeweiligen Axiallagerscheibe zugewandter Übergangsabsatz zwischen dem Randbord und dem sich hieran anschließenden und demgegenüber abgestreckten Randbereich des Lagerkäfigs eine Soll-Biegestelle für die Einfassung der Axiallagerstelle bildet. Mit anderen Worten ist der materialdünnere abgestreckte Randbereich über den Übergangsabsatz mit dem Randbord verbunden, der durch diese Ausrichtung eine geschlossen rechtwinklige Außengeometrie ermöglicht.

Gemäß einem anderen Aspekt der Erfindung wird vorgeschlagen, dass der aus einem Blechmaterial umgeformte Lagerkäfig in Umfangsrichtung zueinander beabstandete Lagerstege aufweist, die der Einfassung der Wälzkörper dienen und jeweils in Form eines Sigmaprofils ausgebildet sind, so dass sich die beiden innen- beziehungsweise außenradialen axial gerichteten Randborde von einer der beiden Axiallagerscheiben ausgehend zur anderen Axiallagerscheibe hin erstrecken. Das allgemein bekannte Sigmaprofil geht von einer axialen Seite des Lagerkäfigs mit zunächst kurzen einander gewandten radialen Abschnitten aus, denen einander zugewandte schräge Flankenabschnitte folgen, die in einem wiederum radial verlaufenden Gipfelabschnitt münden, was im Profil etwa dem großen griechischen Buchstaben Sigma ähnelt. Somit lässt sich mit einem erfindungsgemäß geformten Lagerkäfig ein solches Sigmaprofil zur Gestaltung der Lagerstege realisieren, um damit einerseits eine präzise Führung der Wälzkörper zu ermöglichen und andererseits hieran die funktionsintegrierten Randborde anzuformen, welche neben einer Radialführung der Wälzkörper auch eine Einfassung für die Axiallagerscheiben bilden.

Gemäß einer weiteren die Erfindung verbessernden Maßnahme wird vorgeschlagen, dass das außenradiale Randbord des Lagerkäfigs mit in Umfangsrichtung beabstandet zueinander angeordneten Schmiermitteldurchbrüchen versehen ist. Die Schmiermitteldurchbrüche sind vorzugsweise kreisförmig durch Stanzen eingebracht und ermöglichen eine optimale Schmierung der lagerinneren Wälzkörper zur Verschleißminimierung.

### Detailbeschreibung anhand Zeichnung

Weitere die Erfindung verbessernde Maßnahmen werden nachstehend gemeinsam mit der Beschreibung zweier bevorzugter Ausführungsbeispiele anhand der Figuren näher dargestellt. Es zeigt:
- Fig. 1: einen perspektivischen Teilschnitt durch eine Axialwälzlagereinheit im montierten Zustand,
- Fig. 2: einen Längsschnitt durch die Axialwälzlagereinheit nach Fig.1 im montierten Zustand,
- Fig. 3: einen Längsschnitt durch eine Axialwälzlagereinheit einer anderen Ausführungsform im teilmontierten Zustand, und
- Fig. 4: einen perspektivischen Längsschnitt durch die teilmontierte Wälzlagereinheit nach Fig. 3.

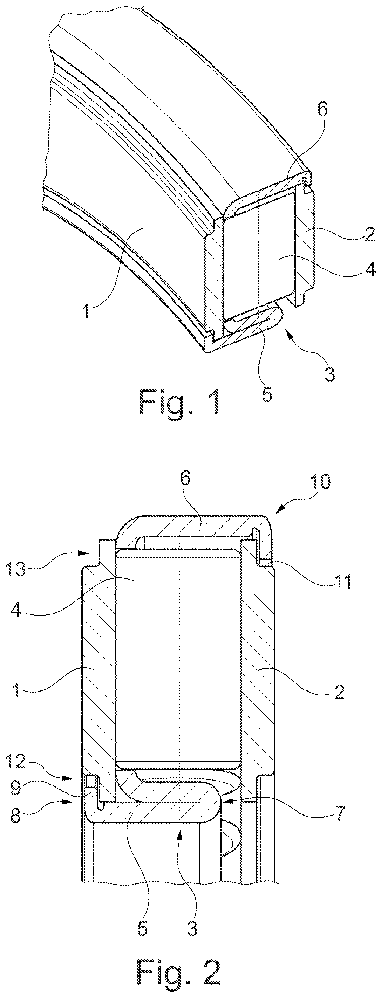

Gemäß Fig. 1 besteht die Axialwälzlagereinheit im Wesentlichen aus zwischen zwei einander gegenüberliegenden kreisringförmigen Axiallagerscheiben 1 und 2 angeordneten Wälzkörpern 4, die hier als Nadeln oder Rollenkörper ausgebildet sind. Die Wälzkörper 4 sind mittels eines aus einem Blechmaterial umgeformten Lagerkäfigs 3 geführt. Der Lagerkäfig 3 weist innen- und außenradial jeweils einen sich in Axialrichtung erstreckendes Randbord 5 beziehungsweise 6 zur Radialführung der Wälzkörper 4 auf.

Gemäß Fig. 2 ist der Randbord 5 als Doppelbord ausgeführt und mit einer endseitigen Umbiegung 7 in die Gegenrichtung versehen. Der distale Endabschnitt 8 des Randbords 5 weist ein die zugeordnete Axiallagerscheibe 1 umgreifendes Randbord 9 auf. Um über den Lagerkäfig 3 als Haltemittel eine in sich selbst haltende Baueinheit zu schaffen, weist das dem Doppelbord gegenüberliegende Randbord 6 des Lagerkäfigs 3 ebenfalls einen distalen Endabschnitt 10 mit einem die andere Axiallagerscheibe 2 umgreifenden Randbord 11 auf.

Die Axiallagerscheiben 1 und 2 weisen einen je innen- und außenradialen Randabsatz 12 beziehungsweise 13 (exemplarisch) auf, der mit dem jeweils zugeordneten abgestreckten distalen Endabschnitt 8 beziehungsweise 10 des je zugeordneten Bordrandes 5 beziehungsweise 6 zusammenwirkt. Der zur Ein- oder Umfassung umgebogene Bordrand 9 beziehungsweise 11 steht nicht über die äußere Seitenfläche der jeweiligen Axiallagerscheiben 1 beziehungsweise 2 über, um eine plane stirnflächige Außenseite zu schaffen.

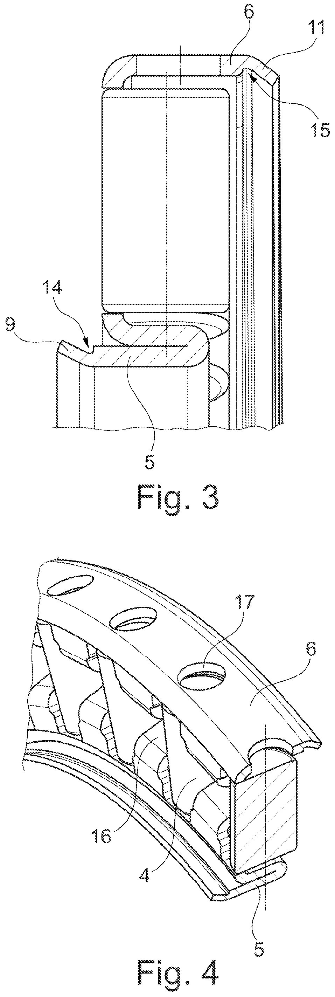

Gemäß Fig. 3 bildet ein der jeweiligen - hier nicht weiter dargestellten - Axiallagerscheibe zugewandter Übergangsabsatz 14 beziehungsweise 15 zwischen dem Randbord 5 beziehungsweise 6 und dem sich hieran anschließenden und demgegenüber abgestreckten Randbereich 9 beziehungsweise 11 eine Soll-Biegestelle für die Einfassung der zugeordneten Axiallagerscheibe.

Nach Fig. 4 weist der aus einem Blechmaterial umgeformte Lagerkäfig 3 in Umfangsrichtung zueinander beabstandete Lagerstege 16 (exemplarisch) auf, die der Einfassung der beabstandet zueinander zu führenden Wälzkörper 4 dienen und jeweils in Form eines Sigmaprofils ausgebildet sind. Diese Formgebung bildet die Voraussetzung dafür, dass sich die beiden innen- beziehungsweise außenradialen axial gerichteten Randborde 5 und 6 von einer der beiden Axiallagerscheiben ausgehend zur anderen Axiallagerscheibe hin erstrecken, so wie aus der Schnittdarstellung gemäß Fig. 2 ersichtlich.

Ferner ist das außenradiale Randbord 6 des Lagerkäfigs 3 mit mehreren, aus dieser Figur am deutlichsten ersichtlichen, in Umfangsrichtung beabstandet zueinander angeordneten kreisförmigen Schmiermitteldurchbrüchen 17 versehen, welche hier durch Stanzen erzeugt sind.

### Bezugszeichenliste

- 1: erste Axiallagerscheibe
- 2: zweite Axiallagerscheibe
- 3: Lagerkäfig
- 4: Wälzkörper
- 5: innenradiales Randbord
- 6: außenradiales Randbord
- 7: Umbiegung
- 8: erster distaler Endabschnitt
- 9: erster Bordrand
- 10: zweiter distaler Endabschnitt
- 11: zweiter Bordrand
- 12: innenradialer Randabsatz
- 13: außenradialer Randabsatz
- 14: erster Übergangsabsatz
- 15: zweiter Übergangssatz
- 16: Lagersteg
- 17: Schmiermitteldurchbruch

## Patentansprüche

1. Axialwälzlagereinheit mit zwischen zwei kreisringförmigen Axiallagerscheiben (1, 2) angeordneten Wälzkörpern (4), die mittels eines aus einem Blechmaterial umgeformten Lagerkäfig (3) geführt sind, der innen- und außenradial jeweils ein sich in Axialrichtung erstreckendes Randbord (5, 6) zur Radialführung der Wälzkörper (4) aufweist, wobei zumindest eines der Randborde (5) als Doppelbord ausgeführt mit einer endseitigen Umbiegung (7) in die Gegenrichtung versehen ist, wobei dessen distaler Endabschnitt (8) als formschlüssiges Haltemittel des Lagerkäfigs (3) für die mindestens eine Axiallagerscheibe (1) ausgebildet ist
**dadurch gekennzeichnet, dass** ein der jeweiligen Axiallagerscheibe (1; 2) zugewandter Übergangsabsatz (14; 15) zwischen dem Randbord (5; 6) und dem sich hieran anschließenden und demgegenüber abgestreckten Randbereich (9; 11) eine Soll-Biegestelle für die Einfassung der zugeordneten Axiallagerscheibe (1; 2) bildet.

2. Axialwälzlagereinheit nach Anspruch 1,
**dadurch gekennzeichnet, dass** der distale Endabschnitt (8) einen die zugeordnete Axiallagerscheibe (1) umgreifenden Bordrand (9) zum formschlüssigen Halten aufweist, und dass der Lagerkäfig (3) das dem Doppelbord gegenüberliegende Randbord (6) des Lagerkäfigs (3) ebenfalls einen distalen Endabschnitt (10) mit einem die andere Axiallagerscheibe (2) umgreifenden Bordrand (11) aufweist, um auch die andere Axiallagerscheibe (2) durch den Lagerkäfig (3) formschlüssig zu halten.

3. Axialwälzlagereinheit nach Anspruch 1 oder 2,
**dadurch gekennzeichnet, dass** zur Biegeerleichterung zumindest einer der distalen Endabschnitte (8, 10) der Randborde (5, 6) umformtechnisch abgestreckt ausgebildet ist.

4. Axialwälzlagereinheit nach Anspruch 1 oder 2,
**dadurch gekennzeichnet, dass** die Axiallagerscheiben (1, 2) einen je innen- und außenradialen Randabsatz (12, 13) aufweisen, der mit dem jeweils zugeordneten abgestreckten distalen Endabschnitt (8; 10) des Randbords (5; 6) derart zusammenwirkt, dass der zur Einfassung umgebogene Bordrand (9; 11) nicht über die äußere Seitenfläche der Axiallagerscheiben (1; 2) hervorsteht.

5. Axialwälzlagereinheit nach Anspruch 2,
**dadurch gekennzeichnet, dass** der die Axiallagerscheibe (1; 2) umgreifede Bordrand (9; 11) des Lagerkäfigs (3) nur abschnittsweise auf einem Teil des Umfangs ausgebildet ist.

6. Axialwälzlagereinheit nach einem der vorstehenden Ansprüche,
**dadurch gekennzeichnet, dass** beide Axiallagerscheiben (1, 2) als Gleichteile ausgeführt sind.

7. Axialwälzlagereinheit nach einem der vorstehenden Ansprüche,
**dadurch gekennzeichnet, dass** der aus einem Blechmaterial umgeformte Lagerkäfig (3) in Umfangsrichtung zueinander beabstandende Lagerstege (16) aufweist, die der Einfassung der Wälzkörper (4) dienen und jeweils in Form eines Sigmaprofils ausgebildet sind, so dass sich die beiden innen- bzw. außenradialen axial gerichteten Randborde (5, 6) von einer der beiden Axiallagerscheiben (1) ausgehend zur anderen Axiallagerscheibe (2) hin erstrecken.

8. Axialwälzlagereinheit nach einem der vorstehenden Ansprüche,
**dadurch gekennzeichnet, dass** der außenradiale Randbord (6) des Lagerkäfigs (3) mit in Umfangsrichtung beabstandet zueinander angeordneten Schmiermitteldurchbrüchen (17) versehen ist.

9. Axialwälzlagereinheit nach einem der vorstehenden Ansprüche,
**dadurch gekennzeichnet, dass** die kreisringförmigen Axiallagerscheiben (1, 2) als Stanz-Präge-Teile ebenfalls umformtechnisch aus einem Bleichmaterial hergestellt sind.

## Claims

1. A thrust rolling bearing unit with rolling elements (4) held between two annular thrust bearing races (1, 2), which are guided by means of a bearing cage (3) formed from a sheet metal material, which has an inner and outer radial edge flange (5, 6) extending in the axial direction for radial guidance of the rolling elements (4), wherein at least one of the edge flanges (5) is designed as a double flange having an end bend (7) in the opposite direction, wherein its distal end section (8) is designed as a form-fitting retaining means of the bearing cage (3) for the at least one thrust bearing race (1),
**characterized in that** a transition shoulder (14; 15) facing the respective thrust bearing race (1; 2) between the edge flange (5; 6) and the adjoining and extended edge region (9; 11) forms a predetermined bending point for enclosing the associated thrust bearing race (1; 2).

2. The thrust rolling bearing unit according to claim 1,
**characterized in that** the distal end section (8) has an end flange (9) encompassing the associated thrust bearing race (1) for holding in a form-fitting manner, and **in that** the bearing cage (3) also has, on the edge flange (6) opposite the double flange of the bearing cage (3), a distal end section (10) with an end flange (11) encompassing the other thrust bearing race (2) in order to hold the other thrust bearing race (2) in a form-fitting manner by means of the bearing cage (3).

3. The thrust rolling bearing unit according to claim 1 or 2,
**characterized in that,** to facilitate bending, at least one of the distal end sections (8, 10) of the edge flanges (5, 6) is formed in an elongate shape by means of a forming process.

4. The thrust rolling bearing unit according to claim 1 or 2,
**characterized in that** the thrust bearing races (1, 2) each have an inner and outer radial edge shoulder (12, 13) that interacts with the respective associated extended distal end section (8; 10) of the edge flange (5; 6) in such a way that the end flange (9; 11), that is bent over to form the surround does not protrude beyond the outer side surface of the thrust bearing races (1; 2).

5. The thrust rolling bearing unit according to claim 2,
**characterized in that** the end flange (9; 11) of the bearing cage (3) encompassing the thrust bearing race (1; 2) is only formed in sections on part of the circumference.

6. The thrust rolling bearing unit according to any one of the preceding claims,
**characterized in that** both thrust bearing races (1, 2) are designed as identical parts.

7. The thrust rolling bearing unit according to any one of the preceding claims,
**characterized in that** the bearing cage (3) formed from a sheet metal material has bearing webs (16) spaced apart from each other in the circumferential direction, which serve to enclose the rolling elements (4) and are each designed in the form of a sigma profile, so that the two inner and outer radial axially directed edge flanges (5, 6) extend from one of the two thrust bearing races (1) to the other thrust bearing race (2).

8. The thrust rolling bearing unit according to any one of the preceding claims,
**characterized in that** the outer radial edge flange (6) of the bearing cage (3) is provided with lubricant openings (17) spaced apart from each other in the circumferential direction.

9. The thrust rolling bearing unit according to any one of the preceding claims,
**characterized in that** the annular thrust bearing races (1, 2) are also manufactured as stamped and embossed parts from a sheet material by means of a forming process.

## Revendications

1. Unité de butée axiale avec des éléments roulants (4) retenus entre deux pistes de butée axiale (1, 2) annulaires, qui sont guidés par le biais d'une cage (3) formée à partir d'un matériau en tôle, qui présente respectivement une bride de bord (5, 6) s'étendant dans la direction axiale radialement à l'intérieur et l'extérieur pour le guidage radial des éléments roulants (4), dans laquelle au moins une des brides de bord (5) est réalisée comme une double bride comportant une courbure (7) côté extrémité dans la direction opposée, dans laquelle sa section d'extrémité distale (8) est conçue comme un moyen de retenue par complémentarité de forme de la cage (3) pour l'au moins une piste de butée axiale (1)
**caractérisée en ce qu'**un épaulement de transition (14 ; 15) faisant face à la piste de butée axiale (1 ; 2) respective entre la bride de bord (5 ; 6) et la zone de bord (9 ; 11) adjacente à celle-ci et étirée par rapport à celle-ci forme un point de courbure de consigne pour l'encadrement de la piste de butée axiale (1 ; 2) associée.

2. Unité de butée axiale selon la revendication 1,
**caractérisée en ce que** la section d'extrémité distale (8) présente un bord de bride (9) englobant la piste de butée axiale (1) associée pour une retenue par complémentarité de forme, et **en ce que** la cage (3) présente également une section d'extrémité distale (10) comportant un bord de bride (11) englobant l'autre piste de butée axiale (2) sur la bride de bord (6) opposée à la double bride de la cage (3) afin de retenir également par complémentarité de forme l'autre piste de butée axiale (2) à travers la cage (3).

3. Unité de butée axiale selon la revendication 1 ou 2,
**caractérisée en ce que** pour faciliter la courbure, au moins une des sections d'extrémité distales (8, 10) des brides de bord (5, 6) est conçue par une technique d'étirage.

4. Unité de butée axiale selon la revendication 1 ou 2,
**caractérisée en ce que** les pistes de butée axiale (1, 2) présentent chacune un épaulement de bord (12, 13) radialement intérieur et extérieur qui interagit avec la section d'extrémité distale (8 ; 10) étirée associée respective de la bride de bord (5 ; 6) de telle sorte que le bord de bride (9 ; 11) courbé pour former l'encadrement ne dépasse pas la surface latérale extérieure des pistes de butée axiale (1 ; 2).

5. Unité de butée axiale selon la revendication 2,
**caractérisée en ce que** le bord de bride (9 ; 11) de la cage (3) englobant la piste de butée axiale (1 ; 2) n'est formé que section par section sur une partie de la circonférence.

6. Unité de butée axiale selon l'une quelconque des revendications précédentes,
**caractérisée en ce que** les deux pistes de butée axiale (1, 2) sont réalisées comme des pièces identiques.

7. Unité de butée axiale selon l'une quelconque des revendications précédentes,
**caractérisée en ce que** la cage (3) formée à partir d'un matériau en tôle présente des âmes de palier (16) espacées l'une de l'autre dans la direction circonférentielle, qui servent à encadrer les éléments roulants (4) et sont respectivement conçues sous la forme d'un profil sigma, de telle sorte que les deux brides de bord (5, 6) radialement intérieures et extérieures dirigées axialement s'étendent de l'une des deux pistes de butée axiale (1) à l'autre piste de butée axiale (2).

8. Unité de butée axiale selon l'une quelconque des revendications précédentes,
**caractérisée en ce que** la bride de bord (6) radialement extérieure de la cage (3) est munie d'ouvertures de lubrification (17) agencées de manière à être espacées les unes des autres dans la direction circonférentielle.

9. Unité de butée axiale selon l'une quelconque des revendications précédentes,
**caractérisée en ce que** les pistes de butée axiale (1, 2) annulaires sont également fabriquées sous forme de pièces estampées et embouties à partir d'un matériau en tôle en utilisant une technologie de formage.
